# EUROPEAN PATENT APPLICATION

(11) **EP 4 039 879 A1**
(43) Date of publication of application: **10.08.2022**
(21) Application number: 20871044.2
(22) Date of filing: 25.08.2020
(51) Int. Cl.: D07B 1/06, C07F 11/00, C10M 135/00, C10M 135/18, C10M 137/10, C10M 139/00, C10N 10/12, C10N 20/02, C10N 30/06, C10N 40/32

(54) **WIRE ROPE**

(30) Priority: 01.10.2019 JP 2019181415
(71) Applicant: Toyoflex Corporation, Tokyo 160-0023 (JP); ASAHI INTECC CO., LTD., Seto-shi, Aichi 489-0071 (JP)
(72) Inventor: KIMURA, Hiroki, Tokyo 160-0023 (JP); ISHIBASHI, Masashi, Tokyo 160-0023 (JP); HASHIMOTO, Takaya, Seto-shi, Aichi 489-0071 (JP)
(74) Representative: Winter, Brandl - Partnerschaft mbB
(86) International application number: PCT/JP2020/031952
(87) International publication number: WO 2021/065251

(57) **Abstract**

The durability of a wire rope is improved. The wire rope includes a rope body having an at least one strand each formed with a plurality of element wires twisted each other; a lubricant interposed between the plurality of element wires of the at least one strand; and a resin layer coating the outer periphery of the rope body along with the lubricant, the lubricant containing a sulfur-containing organic molybdenum compound.

## Description

### Technical Filed

The technology as disclosed herein relates to a wire rope.

### Background Art

Conventionally, a technology is known for enhancing the lubricity of a wire rope while suppressing leakage of a lubricant from the wire rope by impregnating a core portion (a cable core) of the wire rope (a cable) having a plurality of strands twisted with the lubricant (an impregnation oil) in a soft solid form or a low fluid form at room temperature, and by coating the outer periphery of the core portion with a non-metallic coating material (for example, see Patent Document 1).

Further, a technology is known for suppressing leakage of a lubricant from a wire rope at ordinary temperature, the technology involving use of a lubricant in a wire rope, the lubricant containing an organic molybdenum compound and remaining in a semi-solid form at ordinary temperature (for example, see Patent Document 2).

### Citation List

### Patent Document

Patent Document 1: Japanese Patent Application Laid-Open No. H8-120579
Patent Document 2: Japanese Patent Application Laid-Open No. 2008-231293

### Summary of Invention

### Technical Problem

Molybdenum disulfide, which shows good lubricity, may be used as a lubricant. However, molybdenum disulfide, which is in a form of a solid powder, tends to be less uniformly dispersed in a solid or liquid oil which forms a lubricant along with molybdenum disulfide. For a wire rope using such lubricant as described above, molybdenum disulfide may unevenly be distributed in the wire rope, resulting in the development of a friction singular point in which friction arises between element wires of the wire rope at a portion where no molybdenum disulfide is disposed. As a result, element wires may be damaged or broken at a friction singular point. In view of above, there are demands for further improving the durability of a wire rope.

### Disclosed herein is a technology which can solve the aforementioned problems. Solution to Problem

The technology disclosed herein can be implemented, for example, in the following aspects.
(1) A wire rope disclosed herein includes a rope body having an at least one strand each formed with a plurality of element wires twisted each other; a lubricant interposed between the plurality of element wires of the at least one strand; and a resin layer coating the outer periphery of the rope body along with the lubricant, the lubricant containing a sulfur-containing organic molybdenum compound.
   In the present wire rope, the provision of the resin layer can allow the lubricant interposed between the plurality of element wires of the at least one strand to remain between the element wires without causing leakage of the lubricant from the wire rope. This enables the effects of the lubricant to be maintained for a long period of time. Further, in the present wire rope, the lubricant contains a sulfur-containing organic molybdenum compound which can easily be dispersed in a solid or liquid oil more uniformly as compared with solid powdery molybdenum disulfide. This can improve dispersibility of the sulfur-containing organic molybdenum compound in the lubricant. With the lubricant as described above, the sulfur-containing organic molybdenum compound can easily be disposed between the element wires uniformly. Moreover, the sulfur-containing organic molybdenum compound contained in the lubricant may produce molybdenum disulfide due to frictional heat generated by, for example, sliding the wire rope. This enables molybdenum disulfide to be produced uniformly between the element wires, which in turn can suppress the development of a friction singular point in which friction arises between the element wires at a portion where no molybdenum disulfide is disposed. As a result, damage or break of the element wires can be suppressed, which in turn can improve the durability of the wire rope. Therefore, according to the present wire rope, the effects of the lubricant on the wire rope can be maintained for a long period of time, and the durability of the wire rope can also be improved.
(2) In the above wire rope, the lubricant may be a liquid at ordinary temperature. According the present wire rope, the use of a lubricant which is a liquid at ordinary temperature can more effectively improve the dispersibility of the sulfur-containing organic molybdenum compound in the lubricant. Further, the use of a lubricant which is a liquid at ordinary temperature can more effectively improve the uniformity of a coating when the element wires of the at least one strand are coated with the lubricant, leading to more effective suppression of the development of the aforementioned friction singular point in the element wires. Therefore, the durability of the wire rope can be improved more effectively according to the present wire rope.
(3) In the above wire rope, the lubricant may have a viscosity of 100 mm²/s or more and 14100 mm²/s or less at ordinary temperature. In other words, the present wire rope includes a lubricant having a relatively low viscosity at ordinary temperature. This can more effectively improve the dispersibility of the sulfur-containing organic molybdenum compound in the lubricant. Therefore, the durability of the wire rope can be improved more effectively according to the present wire rope.
(4) In the above wire rope, the rope body may have a core strand as the at least one strand. In the present wire rope, the presence of the lubricant between a plurality of element wires of the core strand can improve the durability of the core strand itself. The durability of the core strand significantly contributes to that of the wire rope. Therefore, the durability of the wire rope can be improved more effectively according to the present wire rope.
(5) In the above wire rope, the core strand may be Warrington-twisted. In the core strand formed into the Warrington-twist, a closed space is formed by every 3 element wires of the core strand when viewed at a cross section of the wire rope. By virtue of closed spaces formed as described above, a lubricant disposed within a space less likely moves into other spaces. In other words, a lubricant disposed within a space likely remains within the space. This can prevent a coating of a lubricant on each element wire of the core strand from being lost, and thus the durability of each element wire can be maintained. Therefore, the durability of the wire rope can be improved more effectively according to the present wire rope.
(6) In the above wire rope, the rope body may further have, as the at least one strand, a plurality of side strands twisted around the core strand. In the present wire rope, the presence of the lubricant between a plurality of element wires of the side strands can improve the durability of the side strands themselves. The durability of the side strands contributes to the durability of the wire rope. Therefore, the durability of the wire rope can be improved more effectively according to the present wire rope.
(7) In the above wire rope, the sulfur-containing organic molybdenum compound may be at least one of molybdenum dialkyldithiocarbamate and molybdenum dialkylphosphorodithioate. Molybdenum dialkyldithiocarbamate and molybdenum dialkylphosphorodithioate tend to more readily produce molybdenum disulfide due to frictional heat from the wire rope. Therefore, the durability of the wire rope can be improved more effectively according to the present wire rope. Further, molybdenum dialkyldithiocarbamate and molybdenum dialkylphosphorodithioate can easily be synthesized, or may readily be commercially available.
(8) A wire rope disclosed herein may include a rope body having an at least one strand formed with a plurality of element wires twisted each other; a lubricant interposed between the plurality of element wires of the at least one strand; and a resin layer coating the outer periphery of the rope body along with the lubricant, the lubricant containing a sulfur-free organic molybdenum compound and a sulfur-containing organic compound.
   According to the present wire rope, the inclusion of the resin layer enables the effects of the lubricant interposed between the plurality of element wires of the at least one strand to be maintained for a long period of time. Further, in the present wire rope, the lubricant contains a sulfur-free organic molybdenum compound and a sulfur-containing organic compound which can easily be dispersed in a solid or liquid oil more uniformly as compared with solid powdery molybdenum disulfide. Therefore, the dispersibility of the sulfur-free organic molybdenum compound and the sulfur-containing organic compound in the lubricant can be improved. With the lubricant as described above, the sulfur-free organic molybdenum compound and the sulfur-containing organic compound can easily be disposed between the element wires uniformly. Moreover, the sulfur-free organic molybdenum compound and the sulfur-containing organic compound contained in the lubricant can produce molybdenum disulfide due to frictional heat generated by, for example, sliding the wire rope. This enables molybdenum disulfide to be produced uniformly between the element wires, which in turn can suppress the development of a friction singular point in which friction arises between the element wires at a portion where no molybdenum disulfide is disposed. As a result, damage or break of the element wires can be suppressed, which in turn can improve the durability of the wire rope. Therefore, according to the present wire rope, the effects of the lubricant on the wire rope can be maintained for a long period of time, and the durability of the wire rope can also be improved.
(9) In the above wire rope, the lubricant may be a liquid at ordinary temperature. According the present wire rope, the use of a lubricant which is a liquid at ordinary temperature can more effectively improve the dispersibility of the sulfur-free organic molybdenum compound and the sulfur-containing organic compound in the lubricant. Further, the use of a lubricant which is a liquid at ordinary temperature can more effectively improve the uniformity of a coating when the element wires of the at least one strand are coated with the lubricant, leading to more effective suppression of the development of the aforementioned friction singular point in the element wires. Therefore, the durability of the wire rope can be improved more effectively according to the present wire rope.
(10) In the above wire rope, the lubricant may have a viscosity of 100 mm²/s or more and 14100 mm²/s or less at ordinary temperature. In other words, the present wire rope includes a lubricant having a relatively low viscosity at ordinary temperature. Therefore, the dispersibility of the sulfur-free organic molybdenum compound and the sulfur-containing organic compound in the lubricant can be improved. Consequently, the durability of the wire rope can be improved more effectively according to the present wire rope.
(11) In the above wire rope, the rope body may have a core strand as the at least one strand. In the present wire rope, the presence of the lubricant between a plurality of element wires of the core strand can improve the durability of the core strand itself. The durability of the core strand significantly contributes to that of the wire rope. Therefore, the durability of the wire rope can be improved more effectively according to the present wire rope.
(12) In the above wire rope, the core strand may be Warrington-twisted. In the core strand formed into the Warrington-twist, a closed space is formed by every 3 element wires of the core strand when viewed at a cross section of the wire rope. By virtue of closed spaces formed as described above, a lubricant disposed within a first space less likely moves into other spaces. In other words, a lubricant disposed within a first space likely remains within the first space. This can prevent a coating of a lubricant on each element wire of the core strand from being lost, and thus the durability of each element wire can be maintained. Therefore, the durability of the wire rope can be improved more effectively according to the present wire rope.
(13) In the above wire rope, the rope body may further have, as the at least one strand, a plurality of side strands twisted around the core strand. In the present wire rope, the presence of the lubricant between a plurality of element wires of the side strands can improve the durability of the side strands themselves. The durability of the side strands contributes to the durability of the wire rope. Therefore, the durability of the wire rope can be improved more effectively according to the present wire rope.

It is noted that the technology disclosed herein can be implemented in various aspects, and, for example, can be implemented in those aspects such as a wire rope, a method of manufacturing the wire rope, and the like.

### Brief Description of Drawings

Figure 1 schematically shows a cross-sectional perspective view of the configuration of a wire rope 10 according to a first embodiment.
Figure 2 shows a diagram of the cross-sectional configuration of the wire rope 10 according to the first embodiment.
Figure 3 shows a diagram of the results from performance evaluation.
Figure 4 shows a diagram of a method of conducting performance evaluation.
Figure 5 shows a diagram of the cross-sectional configuration of a wire rope 10A according to a second embodiment.
Figure 6 shows a diagram of the cross-sectional configuration of a wire rope 10B according to a third embodiment.
Figure 7 shows a diagram of the cross-sectional configuration of a wire rope 10C according to a fourth embodiment.
Figure 8 shows a diagram of the cross-sectional configuration of a wire rope 10D according to a fifth embodiment.

### Description of Embodiments

### A. First embodiment:

### A-1. Configuration of a wire rope 10:

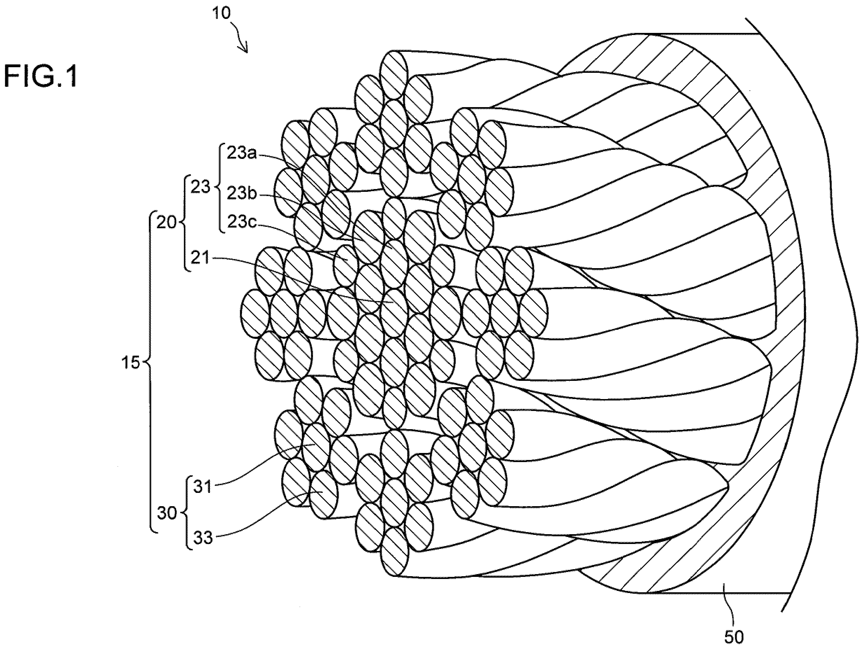

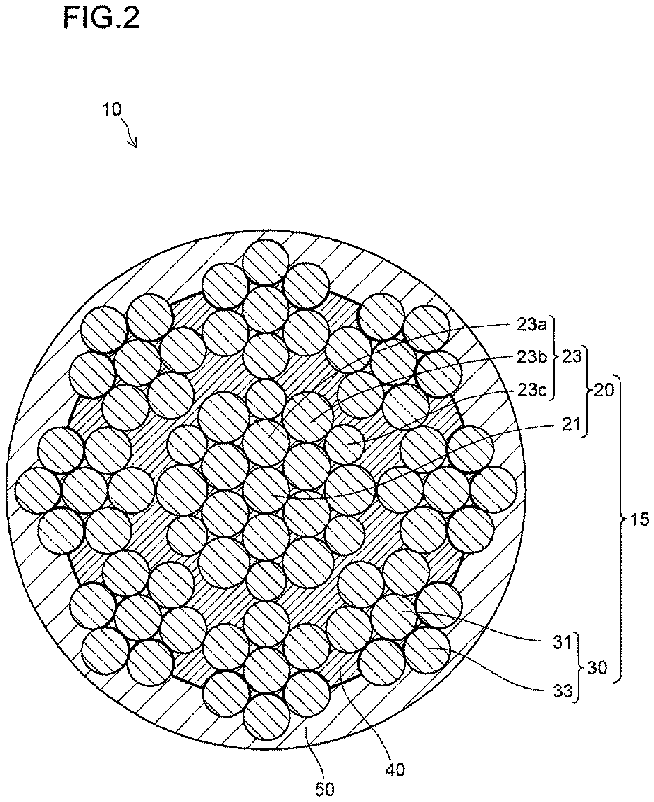

Figure 1 schematically shows a cross-sectional perspective view of the configuration of a wire rope 10 according to a first embodiment, and Figure 2 shows a diagram of the cross-sectional configuration of the wire rope 10. The wire rope 10 may be used in various applications (for example, wire ropes for window regulators and for slide doors of automobiles, wire ropes for power transmission in the industrial fields, wire ropes for window opening/closing systems in the architecture-related fields).

As shown in Figures 1 and 2, the wire rope 10 includes a rope body 15, a lubricant 40, and a resin layer 50. The rope body 15 has a core strand 20 and a plurality of (more specifically 8) side strands 30. It is noted that the lubricant 40 is omitted and not shown in Figure 1.

The core strand 20 has a three-layer structure in which a core element wire 21 and side element wires 23a, 23b, 23c (hereinafter, the side element wires 23a, 23b, 23c may also be referred to as "side element wires 23" collectively, and the core element wire 21 and the side element wires 23 may also be referred to as "element wires 21, 23" collectively) are twisted each other. That is, the core strand 20 has one core element wire 21 as a first layer, 6 side element wires 23a as a second layer, and 6 side element wires 23b, 23c for each as a third layer. Specifically, the 6 side element wires 23a are each arranged around the core element wire 21 along the circumferential direction of the core element wire 21. The 6 side element wires 23b are each arranged between adjacent 2 side element wires 23a around the side element wires 23a. The 6 side element wires 23c are each arranged between adjacent 2 side element wires 23b. In the present embodiment, the core strand 20 is formed by twisting a total 19 of the element wires 21, 23 into the Warrington-twist. Materials for forming the core element wire 21 and the side element wires 23 of the core strand 20 can include, each independently, for example, stainless steel alloys (SUS302, SUS304, SUS316, and the like), nickel-titanium based alloys, nickel-chromium based alloys, cobalt alloys, tungsten, and materials for hard steel wires (SWRH62A, SWRH62B, SWRH72A, SWRH72B, SWRH82A, SWRH82B, and the like). Materials for forming the core element wire 21 and the side element wires 23 may be preferably the materials for hard steel wires, and more preferably may be SWRH62A. Materials for forming the plurality of side element wires 23 may be the same type or may be different types from each other. The core strand 20 is an example of the at least one strand according to the present claims, and the element wires 21, 23 of the core strand 20 are examples of the element wires according to the present claims.

Each of the side strands 30 has a two-layer structure in which a core element wire 31 and side element wires 33 (hereinafter, the core element wire 31 and the side element wires 33 may also be referred to as "element wires 31, 33" collectively) are twisted each other. Specifically, each of the side strands 30 include one core element wire 31 and 6 side element wires 33 arranged therearound. In the present embodiment, each of the side strands 30 is formed by twisting a total 7 of the element wires 31, 33 to each other. Materials for forming the core element wire 31 and the side element wires 33 of the side strands 30 can include, each independently, for example, stainless steel alloys (SUS302, SUS304, SUS316, and the like), nickel-titanium based alloys, nickel-chromium based alloys, cobalt alloys, tungsten, and materials for hard steel wires (SWRH62A, SWRH62B, SWRH72A, SWRH72B, SWRH82A, SWRH82B, and the like). Materials for forming the core element wire 31 and the side element wires 33 may be preferably the materials for hard steel wires, and more preferably may be SWRH62A. Materials for forming the plurality of side element wires 33 may be the same type or may be different types from each other. Materials for forming the element wires 21, 23 of the core strand 20 and materials for forming the element wires 31, 33 of each of the side strands 30 may be the same type or may be different types from each other. The side strands 30 are examples of the at least one strand according to the present claims, and the element wires 31, 33 of the side strands 30 are examples of the element wires according to the present claims.

The rope body 15 is formed by twisting 8 side strands 30 each others on the outer periphery of the core strand 20. When viewed at any cross section of the rope body 15, each of the side strands 30 abuts each other, and the core strand 20 and the side strands 30 abut each other. In the rope body 15 according to the present embodiment, the direction of twisting the element wires 21, 23 of the core strand 20 is Z-twisted, the direction of twisting the element wires 31, 33 of the side strands 30 is S-twisted, and the direction of twisting the side strands 30 against the core strand 20 is Z-twisted. It is noted that a W(19)+8x7 structure is used for the rope body 15, the structure being composed of the core strand 20 formed by twisting a total 19 of the element wires 21, 23 into the Warrington-twist; and the side strands 30 formed with a total 7 of the element wires 31, 33. It is noted that some of the side strands 30 do not abut with the core strand 20 in Figure 2, but these side strands 30 do abut with the core strand 20 on at least one cross section (a cross section different from that shown in Figure 2) of the rope body 15.

As described above, the wire rope 10 includes the lubricant 40. In other words, the lubricant 40 is interposed between the element wires 21, 23 of the core strand 20. The lubricant 40 is also present in at least some of the spaces between the element wires 31, 33 of the side strands 30. Specifically, the outer periphery of each of the element wires 21, 23 and at least some of the element wires 31, 33 are coated with the lubricant 40.

The lubricant 40 contains a sulfur-containing organic molybdenum compound. There is no particular limitation for the sulfur-containing organic molybdenum compound, and any conventional known sulfur-containing organic molybdenum compounds can be used. As the sulfur-containing organic molybdenum compound, for example, molybdenum dialkyldithiocarbamate (MoDTC), molybdenum dialkylphosphorodithioate (MoDTP), and the like can be used. In view of versatility, the sulfur-containing organic molybdenum compound is more preferably molybdenum dialkyldithiocarbamate (MoDTC) or molybdenum dialkylphosphorodithioate (MoDTP). Examples of molybdenum dialkyldithiocarbamate (MoDTC) can include, for example, sulfurized molybdenum dibutyldithiocarbamate, sulfurized molybdenum dipentyldithiocarbamate, sulfurized molybdenum dihexyldithiocarbamate, sulfurized molybdenum diheptyldithiocarbamate, sulfurized molybdenum dioctyldithiocarbamate, sulfurized molybdenum dinonyldithiocarbamate, sulfurized molybdenum didecyldithiocarbamate, sulfurized molybdenum diundecyldithiocarbamate, molybdenum didodecyldithiocarbamate, molybdenum ditridecyldithiocarbamate. Examples of molybdenum dialkylphosphorodithioate (MoDTP) can include, for example, molybdenum diisopropylphosphorodithioate, molybdenum diisobutylphosphorodithioate, molybdenum dipropylphosphorodithioate, molybdenum dibutylphosphorodithioate, molybdenum dipentylphosphorodithioate, molybdenum dihexylphosphorodithioate, molybdenum diheptylphosphorodithioate, or molybdenum diphenylphosphorodithioate. It is noted that the above sulfur-containing organic molybdenum compounds can be used alone or in combinations of two or more.

The lubricant 40 may be a lubricating oil in which a sulfur-containing organic molybdenum compound is contained in a base oil. There is no particular limitation for the base oil, and any conventional known base oils can be used. As the base oil, for example, animal and vegetable oils, mineral oils, synthetic oils, or the like can be used. It is noted that the base oils can be used alone or in combinations of two or more. The lubricant 40 may also contain an antioxidant, an antiwear agent, an extreme-pressure agent, a friction modifier, a metal deactivator, a cleaning agent, a dispersing agent, a viscosity index improver, an anticorrosive agent, an antifoaming agent, and the like as appropriately.

The content of the sulfur-containing organic molybdenum compound in the lubricant 40 is, for example, 1 wt% or more and 20 wt% or less. When the content is less than 1 wt%, a reduced amount of molybdenum disulfide tends to be produced through heat decomposition, resulting in less effectively improved durability. When the content is more than 20 wt%, an increased amount of molybdenum disulfide may be produced, resulting in more deposition of solid powder between element wires. This may reduce adsorption and retention of the lubricant 40 to the surfaces of the element wires, resulting in impaired lubricity between the element wires. This, in turn, tends to decrease durability. In view of durability, the content is more preferably 3 wt% or more and 15 wt% or less, even more preferably 5 wt% or more and 10 wt% or less. The content of metallic molybdenum in the lubricant 40 is, for example, 25 ppm or more and 1000 ppm or less.

The lubricant 40 is a liquid at ordinary temperature. The term "ordinary temperature" as used herein refers to a temperature of, for example, 5 to 30°C, preferably 15 to 25°C. The lubricant 40 has a viscosity of, for example, 100 mm²/s or more and 14100 mm²/s or less at ordinary temperature. When the viscosity is less than 100 mm²/s, that lubricant tends to easily leak in the rope before coating. When the viscosity is more than 14100 mm²/s, that lubricant tends not to easily permeate (enter) into spaces between element wires. In view of durability, the viscosity is more preferably 100 mm²/s or more and 8150 mm²/s or less, even more preferably 100 mm²/s or more and 2200 mm²/s or less. The viscosity can be measured, for example, in accordance with JIS K 2283 (with a glass capillary viscometer). The term "viscosity at ordinary temperature" means a viscosity obtained when measurements are performed after the temperature of a lubricant is set at any one value of temperature within the aforementioned range of temperature. Upon performing measurements, it is possible to set the temperature of a lubricant at any one value of temperature within the aforementioned range of temperature.

The content of the lubricant 40 in the wire rope 10 is, for example, 1 wt% or more and 4 wt% or less relative to the weight of 1-m length of the wire rope 10. When the content is less than 1 wt%, the lubricity between the element wires may be impaired, which in turn tends to decrease durability. When the content is more than 4 wt%, the lubricant 40 tends to be exposed to high temperature, and may evaporate when the rope body 15 is coated with a resin for forming the resin layer 50. This may generate air bubbles in the resin layer 50. In view of workability, durability, and yield, the content is more preferably 1 wt% or more and 3 wt% or less, even more preferably 1 wt% or more and 2 wt% or less. It is noted that the content of the lubricant 40 in the wire rope 10 can be measured by the following method. First, 1 m of the wire rope 10 is cut out, and its weight (hereinafter, may also be referred to as a "pre-degreasing weight ") is measured. The cut-out portion of the wire rope 10 is then degreased, and its weight (hereinafter, may also be referred to a "post-degreasing weight ") is measured. The content of the lubricant 40 in the wire rope 10 can be calculated by subtracting the post-degreasing weight from the pre-degreasing weight.

As described above, the wire rope 10 includes the resin layer 50. In other words, it includes the resin layer 50 coating the outer periphery of the rope body 15 along with the lubricant 40. The resin layer 50 may also be disposed between the core strand 20 and the side strands 30, between the element wires 21, 23 of the core strand 20, and between the element wires 31, 33 of the side strands 30.

The coating thickness of the resin layer 50 is, for example, 0.05 mm or more and 5 mm or less. When the coating thickness is less than 0.05 mm, a crack or a breakage in coating may occur in the resin layer 50, resulting in leakage of the lubricant 40 from the crack. If this is the case, durability tends not to be easily improved. When the coating thickness is more than 5 mm, the flexibility of the wire rope 10 tends to be impaired. In view of durability and flexibility, the coating thickness is more preferably 0.1 mm or more and 3 mm or less, even more preferably 0.15 mm or more and 2 mm or less. Further, the ratio of the coating thickness of the resin layer 50 to the diameter of the wire rope 10 is, for example, 1% or more and 30% or less on a cross section of the wire rope 10. When the ratio of coating thickness is less than 1%, a crack or a breakage in coating may occur in the resin layer 50, resulting in leakage of the lubricant 40 from the crack. If this is the case, durability tends not to be easily improved. When the ratio of coating thickness is more than 30%, the flexibility of the wire rope 10 tends to be impaired. In view of durability and flexibility, the ratio of coating thickness is more preferably 5% or more and 25% or less, even more preferably 10% or more and 20% or less. It is noted that the term "coating thickness of the resin layer 50" as used herein means a distance between the outer periphery of a side element wire 33 located in the outermost side among the side element wires 33 of the side strands 30 and the outer periphery of the wire rope 10 when viewed at a cross section of the wire rope 10.

There is no particular limitation for a material for forming the resin layer 50, and any conventional known resins may be used. As the material for forming the resin layer 50, thermoplastic resins may be used such as, for example, polyamide based resins, polyacetal based resins, polycarbonate based resins, polyester based resins, polypropylene based resins, polyethylene based resin, polyvinyl chloride based resins, or various elastomer based resins. In view of ensuring the durability and flexibility of the wire rope 10, the resin is more preferably a polyamide based resin. As the polyamide based resin, for example, polyamide 6 resin, polyamide 11 resin, polyamide 12 resin, polyamide 66 resin, and the like may be used. The polyamide based resin is more preferably a petroleum-derived polyamide based resin, even more preferably polyamide 12 resin. It is noted that the above resins can be used alone or in combinations of two or more.

In view of workability, durability, and flexibility, the material for forming the resin layer 50 is preferably polyamide 12 resin when molybdenum dialkyldithiocarbamate (MoDTC) or molybdenum dialkylphosphorodithioate (MoDTP) is used as the lubricant 40.

### A-2. Method of manufacturing the wire rope 10:

Next, an example of the method of manufacturing the wire rope 10 will be described. First, the core strand 20 having the lubricant 40 interposed between the element wires 21, 23; and the side strands 30 are fabricated.

An example of the method of manufacturing the core strand 20 having the lubricant 40 interposed between the element wires 21, 23 is as follows. The lubricant 40 are applied to the element wires 21, 23 of the core strand 20, which are then Warrington-twisted. Meanwhile, the element wires 33 are twisted around the element wire 31 of each of the side strands 30. Then, the rope body 15 (specifically, the rope body 15 composed of the core strand 20 having the lubricant 40 interposed between the element wires 21, 23; and the side strands 30) is fabricated by twisting the side strands 30 around the core strand 20 having the lubricant 40 interposed between the element wires 21, 23.

Subsequently, the rope body 15 is coated with the resin layer 50. For example, a coating (the resin layer 50) can be formed by the pressurized extrusion coating method. Specifically, a resin (for example, polyamide) for forming the resin layer 50 is first melted to prepare a melted resin, which is then pressurized. The rope body 15 is passed through the pressurized melted resin, and then cooled to form the resin layer 50 on the rope body 15. By the manufacturing method as described above, the wire rope 10 having the aforementioned configuration is manufactured.

### A-3. Effects of the first embodiment:

As described above, the wire rope 10 includes the rope body 15, the lubricant 40, and the resin layer 50. The rope body 15 has the core strand 20 and the side strands 30. The core strand 20 is formed with the plurality of element wires 21, 23 twisted each other. The side strands 30 are each formed with the plurality of element wires 31, 33 twisted each other. The lubricant 40 is interposed between the plurality of element wires 21, 23 of the core strands 20, and also present in at least some of the spaces between the plurality of element wires 31, 33 of the side strands 30. The outer periphery of the rope body 15 along with the lubricant 40 is coated with the resin layer 50. The lubricant 40 contains a sulfur-containing organic molybdenum compound.

The provision of the resin layer 50 on the wire rope 10 can allow the lubricant 40 interposed between the plurality of element wires 21, 23, 31, 33 of the core strand 20 and the side strands 30 to remain between the element wires 21, 23, 31, 33 without causing leakage of the lubricant 40 from the wire rope 10. This enables the effects of the lubricant 40 to be maintained for a long period of time. Further, in the wire rope 10 according to the present embodiment, the lubricant 40 contains a sulfur-containing organic molybdenum compound which can easily be dispersed in a solid or liquid oil more uniformly as compared with solid powdery molybdenum disulfide. This can improve dispersibility of the sulfur-containing organic molybdenum compound in the lubricant 40. With the lubricant 40 as described above, the sulfur-containing organic molybdenum compound can easily be disposed between the element wires 21, 23, 31, 33 uniformly. Moreover, the sulfur-containing organic molybdenum compound contained in the lubricant 40 may produce molybdenum disulfide due to frictional heat generated by, for example, sliding the wire rope 10. This can allow molybdenum disulfide to be produced uniformly between the element wires 21, 23, 31, 33, thereby, in the element wires 21, 23, 31, 33, suppressing the development of a friction singular point in which friction arises between the element wires 21, 23, 31, 33 at a portion where no molybdenum disulfide is disposed. As a result, damage or break of the element wires 21, 23, 31, 33 can be suppressed, which in turn can improve the durability of the wire rope 10. Therefore, according to the wire rope 10 of the present embodiment, the effects of the lubricant 40 on the wire rope 10 can be maintained for a long period of time, and the durability of the wire rope 10 can also be improved.

In the wire rope 10, the lubricant 40 is a liquid at ordinary temperature. This can more effectively improve the dispersibility of the sulfur-containing organic molybdenum compound in the lubricant 40. Further, the use of the lubricant 40 which is a liquid at ordinary temperature can more effectively improve the uniformity of a coating when the element wires 21, 23, 31, 33 of the core strand 20 and the side strands 30 are coated with the lubricant 40, leading to more effective suppression of the development of the aforementioned friction singular point in the element wires 21, 23, 31, 33. Consequently, the durability of the wire rope 10 can be improved more effectively.

In the wire rope 10, the lubricant 40 has a viscosity at ordinary temperature of 100 mm²/s or more and 14100 mm²/s or less. In other words, the lubricant 40 has a relatively low viscosity at ordinary temperature. This can more effectively improve the dispersibility of the sulfur-containing organic molybdenum compound in the lubricant 40. Consequently, the durability of the wire rope 10 can be improved more effectively.

As described above, in the wire rope 10, the rope body 15 has the core strand 20. The presence of the lubricant 40 between the plurality of element wires 21, 23 of the core strand 20 can improve the durability of the core strand 20 itself. The durability of the core strand 20 significantly contributes to that of the wire rope 10. Consequently, the durability of the wire rope 10 can be improved more effectively.

As described above, the core strand 20 is Warrington-twisted. In the core strand 20 formed into the Warrington-twist, a closed space is formed by every 3 element wires of the core strand 20 when viewed at a cross section of the wire rope 10. By virtue of closed spaces formed as described above, the lubricant 40 disposed within a space less likely moves into other spaces. In other words, a portion of the lubricant 40 disposed within a space likely remains within the space. This can prevent a coating of the lubricant on each of the element wires 21, 23 of the core strand 20 from being lost, and thus the durability of each of the element wires 21, 23 can be maintained. Consequently, the durability of the wire rope 10 can be improved more effectively.

As described above, the rope body 15 has the plurality of side strands 30 twisted around the core strand 20. The presence of the lubricant 40 between the plurality of element wires 31, 33 of the side strands 30 can improve the durability of the side strands 30 themselves. The durability of the side strands 30 significantly contributes to that of the wire rope 10. Consequently, the durability of the wire rope 10 can be improved more effectively.

In the wire rope 10, the sulfur-containing organic molybdenum compound is molybdenum dialkyldithiocarbamate or molybdenum dialkylphosphorodithioate. Molybdenum dialkyldithiocarbamate and molybdenum dialkylphosphorodithioate tend to readily produce molybdenum disulfide due to frictional heat from the wire rope 10. Consequently, the durability of the wire rope 10 can be improved more effectively. Further, molybdenum dialkyldithiocarbamate and molybdenum dialkylphosphorodithioate can easily be synthesized, or may readily be commercially available.

### B. Performance evaluation:

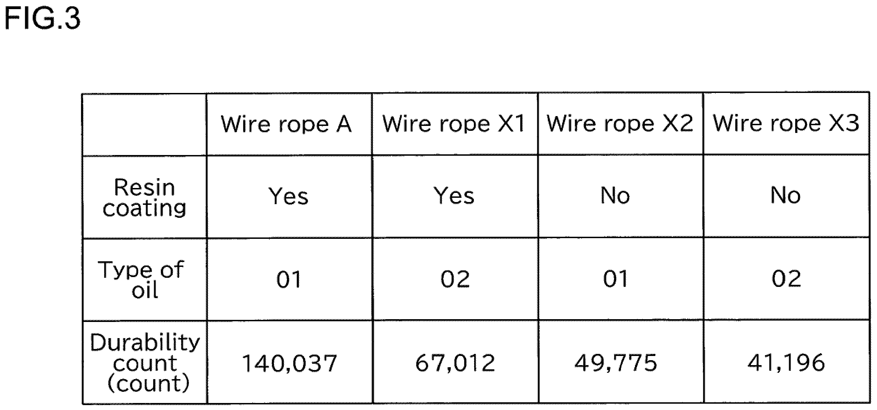

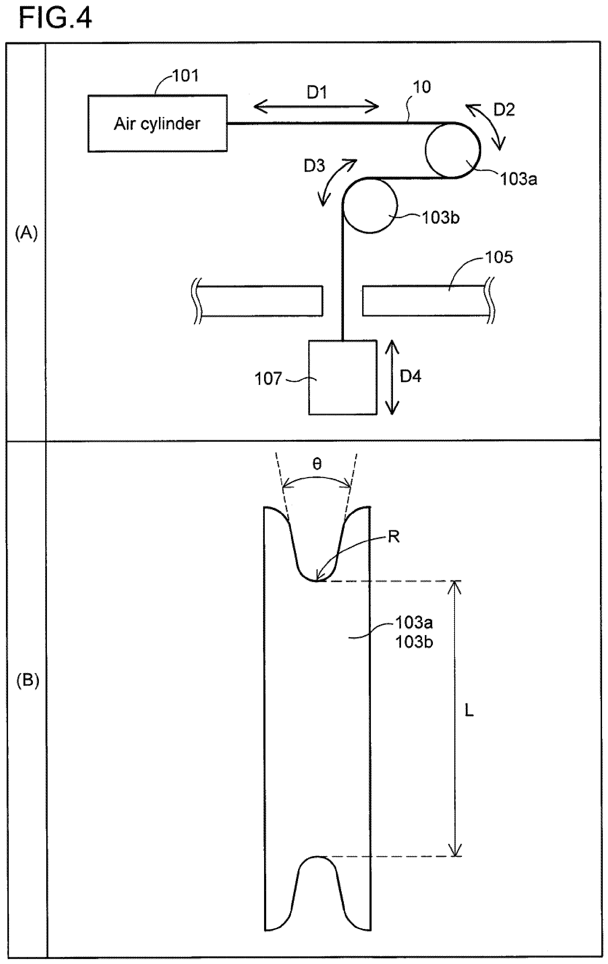

Wire ropes were subjected to performance evaluation for durability. Figure 3 shows a diagram of the results from performance evaluation, and Figure 4 shows a diagram of a method of evaluating performance evaluation.

As shown in Figure 3, 4 types of wire ropes (wire ropes A, X1 to X3) were used for performance evaluation. The wire rope A has a configuration similar to that of the wire rope 10 according to the first embodiment as described above. The wire rope X1 has a configuration in which a lubricant different from the lubricant 40 is used in the wire rope 10 according to the first embodiment as described above. The wire rope X2 has a configuration in which the resin layer 50 is not provided in the wire rope 10. The wire rope X3 has a configuration in which a lubricant different from the lubricant 40 is used, and the resin layer 50 is not provided in the wire rope 10. Detailed configurations of the wire ropes A, X1 to X3 are each described as follows.

### [Wire rope A]

### <Core strand 20>

- Number of the core element wire 21: one (0.17 mm in diameter)
- Number of the side element wire 23a: 6 (0.16 mm in diameter)
- Number of the side element wire 23b: 6 (0.17 mm in diameter)
- Number of the side element wire 23c: 6 (0.13 mm in diameter)
- Outer diameter of the core strand 20: 0.75 mm
- Material of the core strand 20: SWRH62A

### <Side strand 30>

- Number of the side strands 30: 8
- Number of the core element wire 31: one (0.15 mm in diameter)
- Number of the side element wire 33: 6 (0.14 mm in diameter)
- Outer diameter of the side strand 30: 0.43 mm
- Material of the side strand 30: SWRH62A

### <Rope body 15>

- Outer diameter: 1.61 mm

### <Lubricant 40>

- Oil S1: an oil containing a sulfur-containing organic molybdenum compound (having a viscosity of 100 mm²/s at 40°C)
- The content of the lubricant 40 relative to 1-m length of the wire rope 10: 1.5 wt%

### <Resin layer 50>

- Type of resin: polyamide 12
- Coating thickness: 0.15 mm

### <Wire rope 10>

- Outer diameter: 1.91 mm

### [Wire rope X1]

- The rope body 15 and the resin layer 50 are similar to those of the wire rope A. <Lubricant 40>
- Oil S2: an oil containing a sulfur compound (having a viscosity of 120 mm²/s at 40°C)
- The content of the lubricant relative to 1-m length of the wire rope 10: 1.5 wt%

### [Wire rope X2]

- The rope body 15 and the lubricant 40 are similar to those of the wire rope A.

### <Resin layer>

- None

### [Wire rope X3]

- The rope body 15 is similar to that of the wire rope A, and the lubricant is similar to that of the wire rope X1.

### <Resin layer>

- None

The wire ropes A, X1 to X3 were evaluated for durability by the following method.

Figure 4(A) shows a measurement device for measuring the durability of a wire rope. The wire rope 10 (specifically, the wire rope A) having a full length of 1000 mm is fixed at one end thereof to an air cylinder 101. The wire rope 10 was routed such that the wire rope 10 extended from the air cylinder 101 is turned by 180° at a pulley 103a, and then turned again by 90° at a pulley 103b. The wire rope 10 is allowed to pass through a through-hole formed at a stopper 105. The wire rope 10 is connected at the other end to a 10-kg weight 107.

In Figure 4(A), the wire rope 10 slides on the grooves (see Figure 4(B)) of the pulleys 103a, 103b as the air cylinder 101 reciprocates in directions D1. Thereby, the pulley 103a rotates in directions D2, and the pulley 103b rotates in directions D3. Reciprocation of the air cylinder 101 causes the weight 107 coupled with the wire rope 10 to reciprocate (ascend and descend) in directions D4.

Figure 4(B) shows a partially enlarged side view of the pulleys 103a, 103b. The detailed configuration of the pulleys 103a, 103b is described as follows.

### <Pulleys 103a, 103b>

- Groove diameter L: 25 mm
- Groove angle θ: 30°
- Curvature radius R at groove bottom: 0.9 mm
- Material: polyacetal resin

The durability of the wire rope 10 was measured under the following conditions. First, the air cylinder 101 pulled the wire rope 10 in a direction where the weight 107 ascended. After the weight 107 hit the stopper 105, the wire rope 10 was held for 0.5 seconds with a tension of 490 N. Then, the wire rope 10 was allowed to move in a direction where the weight 107 descended. This reciprocation of ascent and descent was considered as one stroke. Here, the distance of one stroke of the wire rope 10 was set to 150 mm, and the reciprocation speed was set to 20 strokes/min. To evaluate the durability of the wire rope 10, the number of reciprocation strokes until the wire rope 10 was broken was measured under the above conditions.

Figure 3 shows results from measurements of durability (that is, the number of reciprocation strokes until breakage of the wire rope 10, which hereinafter may also be referred to as "durability count") for the wire ropes A, X1 to X3. First, the durability count was 41,196 counts for the wire rope X3 in which the oil S2 was used as a lubricant, and the resin layer 50 was not provided. In contrast, the durability count was 49,775 counts for the wire rope X2 in which the oil S1 was used as the lubricant 40, and the resin layer 50 was not provided. The difference in durability counts between these two was 8,579 counts, indicating a percentage increase of about 120%. The wire rope X2 differs from the wire rope X3 in that the oil S1 is used as the lubricant 40. Therefore, it was thought that the difference and percentage increase in the durability counts could be attributed to the replacement of the oil S2 with the oil S1 as the lubricant 40.

The durability count was 67,012 counts for the wire rope X1 in which the oil S2 was used as a lubricant, and the resin layer 50 was provided. In the wire ropes X1, X3, the difference in durability counts between these two was 25,816 counts, indicating a percentage increase of about 163%. The wire rope X1 differs from the wire rope X3 in that the resin layer 50 is provided. Therefore, it was thought that the difference and percentage increase in durability counts could be attributed to the provision of the resin layer 50.

In contrast, the durability count was 140,037 counts for the wire rope A in which the oil S1 was used as the lubricant 40, and the resin layer 50 was provided. This was a very high value. As compared with the wire rope X1 which was different from the wire rope A in that the oil S2 was used as the lubricant 40, the durability count of the wire rope A was higher by 73,025 counts, indicating a percentage increase of about 209%. This difference and percentage increase in durability counts were remarkable as compared with the comparison between the wire rope X2 and the wire rope X3, i.e., as compared with the difference (8,579 counts) and percentage increase (about 120%) attributed to the replacement of the oil S2 with the oil S1 as the lubricant 40 in the wire rope X3 which did not include the resin layer 50. Further, as compared with the wire rope X2 which differed from the wire rope A in that the resin layer 50 was not provided, the durability count of the wire rope A was higher by 90,262 counts, indicating a percentage increase of about 281%. This difference and percentage increase in durability counts were remarkable as compared with the comparison between the wire rope X1 and the wire rope X3, i.e., as compared with the difference (25,816 counts) and percentage increase (about 163%) attributed to the provision of the resin layer 50 in the wire rope X3 in which the oil S2 was used as the lubricant 40.

As described above, it was thought that the wire rope A showed a high durability count and percentage increase by virtue of including both the oil S1 as the lubricant 40 and the resin layer 50. This presumably occurred as follows: the oil S1 as the lubricant 40 is a liquid at ordinary temperature, and thus the element wires 21, 23, 31, 33 (in particular, the element wires 21, 23 of the core strand 20) can be uniformly coated with the lubricant 40. This can reduce friction singular points in which friction arises between the element wires 21, 23, 31, 33, which, in turn, can reduce damage or break of the element wires 21, 23, 31, 33 due to friction. The above effect was also presumably due to the followings: the rope body 15 composed of the core strand 20 and the side strands 30 is coated with the resin layer 50, and thus the oil S1 remains between the element wires 21, 23, 31, 33 without causing leakage of the oil S1 from the wire rope 10. This can allow the effects of the oil S1 as the lubricant 40 to be maintained. Further, it was able to be confirmed that molybdenum disulfide was generated from the sulfur-containing organic molybdenum compound contained in the oils S1 by repeated friction between the element wires 21, 23, 31, 33. This presumably allowed for an additional low friction state in the wire rope A.

### C. Second embodiment:

Next, a wire rope according to a second embodiment will be described. The wire rope according to the present embodiment differs from the wire rope 10 according to the first embodiment in that the lubricant contains a sulfur-free organic molybdenum compound and a sulfur-containing organic compound. Below, among the configurations of the wire rope according to the second embodiment, those identical to those of the wire rope 10 according to the first embodiment as described above will be omitted for their descriptions appropriately.

As described above, the wire rope according to the present embodiment contains, as the lubricant, the sulfur-free organic molybdenum compound (i.e., an organic molybdenum compound which does not contain sulfur as a constituent element), and the sulfur-containing organic compound. There is no particular limitation for the sulfur-free organic molybdenum compound, and any conventional known sulfur-free organic molybdenum compounds can be used. As the sulfur-free organic molybdenum compound, for example, a molybdenum-amine complex, a molybdenum-succinimide complex, a molybdenum salt of organic acid, a molybdenum salt of alcohol, and the like can be used. The sulfur-free organic molybdenum compound is more preferably a molybdenum-amine complex, a molybdenum salt of organic acid, or a molybdenum salt of alcohol. It is noted that the sulfur-free organic molybdenum compounds can be used alone or in combinations of two or more.

There is no particular limitation for the sulfur-containing organic compound, and any conventional known sulfur-containing organic compounds can be used. As the sulfur-containing organic compound, for example, thiadiazole, sulfurized olefin, sulfurized oil and fat, sulfurized ester, or polysulfide can be used. The sulfur-containing organic compound is more preferably sulfurized olefin, thiadiazole, or sulfurized oil and fat, even more preferably thiadiazole. It is noted that the sulfur-containing organic compounds can be used alone or in combinations of two or more.

The lubricant of the present embodiment may be a lubricating oil in which a sulfur-free organic molybdenum compound and a sulfur-containing organic compound are contained in a base oil as in the lubricant 40 used in the first embodiment. The lubricant of the present embodiment may appropriately contain an antioxidant, an antiwear agent, an extreme-pressure agent, a friction modifier, a metal deactivator, a cleaning agent, a dispersing agent, a viscosity index improver, an anticorrosive agent, an antifoaming agent, and the like as in the lubricant 40 used in the first embodiment.

The wire rope according to the present embodiment can be manufactured by the same method as that used for the wire rope 10 according to the first embodiment as described above. That is, in the method of manufacturing the wire rope according to the present embodiment, the lubricant of the second embodiment, i.e., an oil in which a sulfur-free organic molybdenum compound and a sulfur-containing organic compound are dissolved in a base oil, is used instead of the lubricant 40 used in the first embodiment.

In the wire rope according to the present embodiment, the provision of the resin layer can allow the lubricant interposed between the plurality of element wires of the core strand and the side strands to remain between the element wires without causing leakage of the lubricant from the wire rope. This enables the effects of the lubricant to be maintained for a long period of time. Further, in the wire rope according to the present embodiment, the lubricant contains a sulfur-free organic molybdenum compound and a sulfur-containing organic molybdenum compound which can easily be dispersed in a solid or liquid oil more uniformly as compared with solid powdery molybdenum disulfide. Therefore, the dispersibility of the sulfur-free organic molybdenum compound and the sulfur content organic compound in the lubricant can be improved. With such lubricant as described above, the sulfur-free organic molybdenum compound and the sulfur-containing organic compound can easily be disposed between the element wires uniformly. Moreover, the sulfur-free organic molybdenum compound and the sulfur-containing organic compound contained in the lubricant can produce molybdenum disulfide due to frictional heat generated by, for example, sliding the wire rope. This enables molybdenum disulfide to be produced uniformly between the element wires, which in turn can suppress the development of a friction singular point in which friction arises between the element wires at a portion where no molybdenum disulfide is disposed. As a result, damage or break of the element wires can be suppressed, which in turn can improve the durability of the wire rope. Therefore, in the wire rope according to the present embodiment, the effects of the lubricant can be maintained for a long period of time, and the durability of the wire rope can also be improved.

### D. Third embodiment:

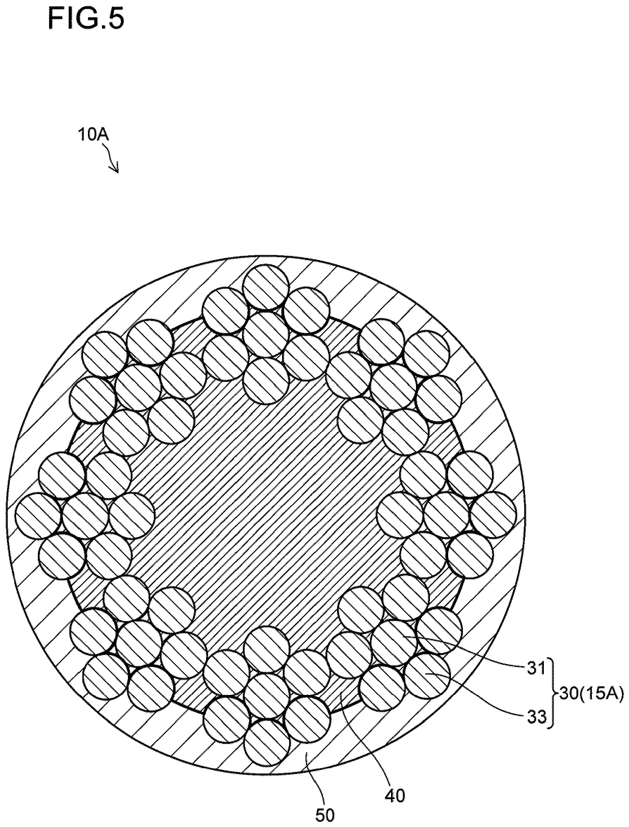

Figure 5 shows a diagram of the cross-sectional configuration of a wire rope 10A according to a third embodiment. Below, among the configurations of the wire rope 10A, those identical to those of the wire rope 10 according to the first embodiment as described above have the same reference numbers, and their descriptions will be omitted appropriately.

As shown in Figure 5, the wire rope 10A includes a rope body 15A, the lubricant 40, and the resin layer 50. The wire rope 10A differs from the wire rope 10 according to the first embodiment mainly in that the rope body 15A is composed of a plurality (specifically 8) of side strands 30. That is, the rope body 15A does not have the core strand 20.

The rope body 15A is formed by twisting the 8 side strands 30 each other. When viewed at any cross section of the rope body 15A, the side strands 30 each abut with each other. It is noted that the configurations of the side strands 30 of the present embodiment are each similar to those of the side strands 30 of the first embodiment, and their descriptions will be omitted.

As described above, the wire rope 10A includes the lubricant 40. In the wire rope 10A, the lubricant 40 is interposed in at least some of the spaces between the element wires 31, 33 of the side strands 30. Further, the lubricant 40 is also disposed inside the rope body 15A (more specifically, inside the side strands 30 in the radial direction of the rope body 15A). Specifically, at least a portion of the element wires 31, 33 is coated with the lubricant 40. It is noted that the configurations of the lubricant 40 and the resin layer 50 of the present embodiment are each similar to those of the lubricant 40 and the resin layer 50 of the first embodiment, and their descriptions will be omitted.

Again in the wire rope 10A, the provision of the resin layer 50 as in the wire rope 10 according to the first embodiment can allow the lubricant 40 interposed between the plurality of element wires 31, 33 of the side strands 30 to remain between the element wires 31, 33 without causing leakage of the lubricant 40 from the wire rope 10A. Therefore, according to the wire rope 10A, the effects of the lubricant 40 can be maintained for a long period of time, and the durability of the wire rope 10A can also be improved.

### E. Fourth embodiment:

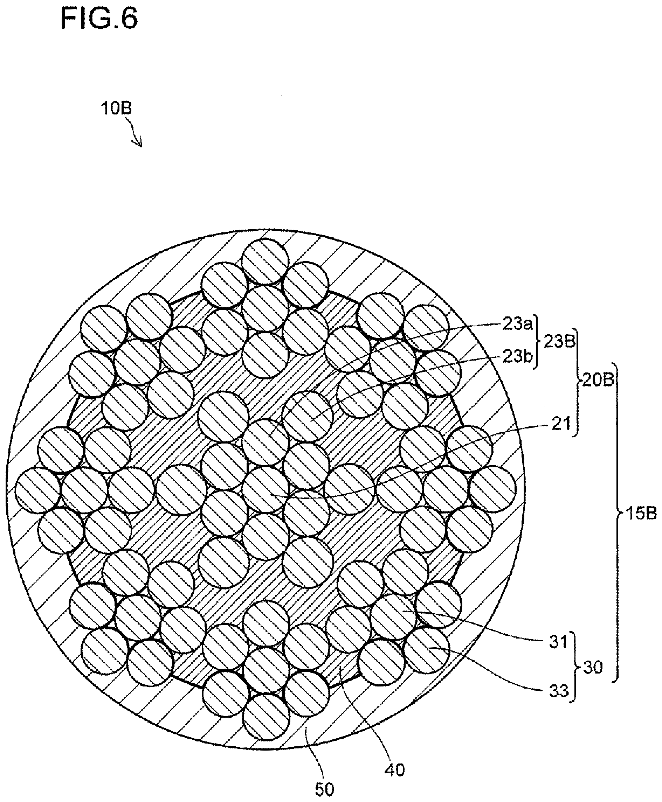

Figure 6 shows a diagram of the cross-sectional configuration of a wire rope 10B according to a fourth embodiment. Below, among the configurations of the wire rope 10B, those identical to those of the wire ropes 10, 10A according to the embodiments as described above have the same reference numbers, and their descriptions will be omitted appropriately.

As shown in Figure 6, the wire rope 10B includes a rope body 15B, the lubricant 40, and the resin layer 50. The wire rope 10B differs from the wire rope 10 according to the first embodiment mainly in that a core strand 20B of the rope body 15B is not Warrington-twisted.

The rope body 15B has the core strand 20B and a plurality of (more specifically 8) side strands 30. The core strand 20B has a three-layer structure in which a core element wire 21 and side element wires 23B (specifically, side element wires 23a, 23b) are twisted each other. That is, the core strand 20B has one core element wire 21 as a first layer, 6 side element wires 23a as a second layer, and 6 side element wires 23b as a third layer. Specifically, the 6 side element wires 23a are each arranged around the core element wire 21 along the circumferential direction of the core element wire 21. The 6 side element wires 23b are each arranged between adjacent 2 side element wires 23a around the side element wires 23a. In the present embodiment, the core strand 20B is formed by twisting a total 13 of the element wires 21, 23B into the parallel twist. The rope body 15B according to the present embodiment is formed by twisting 8 side strands 30 each other on the outer periphery of the core strand 20B. When viewed at any cross section of the rope body 15B, the side strands 30 each abut with each other, and the core strand 20B and the side strands 30 abut with each other. It is noted that some of the side strands 30 do not abut with the core strand 20B in Figure 6, but these side strands 30 do abut with the core strand 20B on at least one cross section (a cross section different from that shown in Figure 6) of the rope body 15B.

As described above, the wire rope 10B includes the lubricant 40. The lubricant 40 is interposed between the element wires 21, 23B of the core strand 20B. The lubricant 40 is also present in at least some of the spaces between the element wires 31, 33 of the side strands 30. Specifically, the outer periphery of each of the element wires 21, 23B and at least some of the element wires 31, 33 are coated with the lubricant 40. It is noted that the configurations of the lubricant 40 and the resin layer 50 of the present embodiment are each similar to those of the lubricant 40 and the resin layer 50 of the first embodiment, and their descriptions will be omitted.

In the wire rope 10B, the provision of the resin layer 50 as in the wire rope 10 according to the first embodiment can allow the lubricant 40 interposed between the plurality of element wires 21, 23B, 31, 33 of the core strand 20B and the side strands 30 to remain between the element wires 21, 23B, 31, 33 without causing leakage of the lubricant 40 from the wire rope 10B. Therefore, according to the wire rope 10B, the effects of the lubricant 40 can be maintained for a long period of time, and the durability of the wire rope 10B can also be improved.

### F. Fifth embodiment:

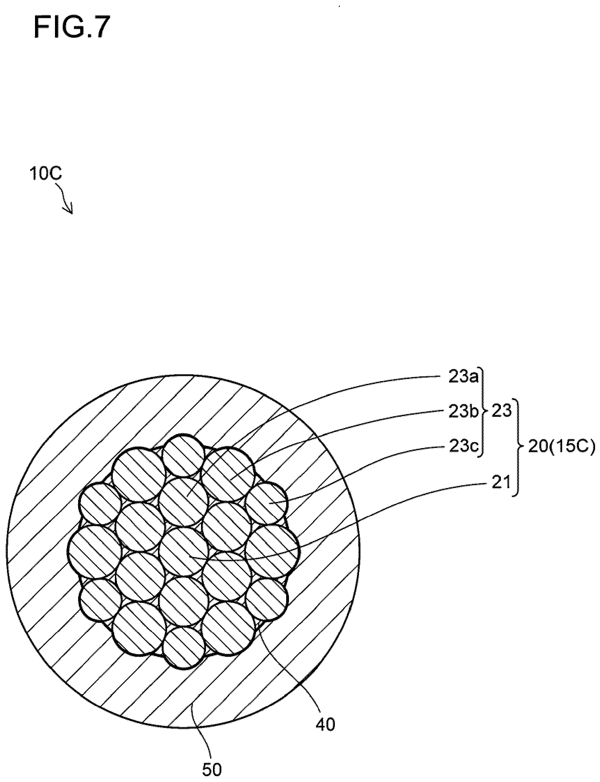

Figure 7 shows a diagram of the cross-sectional configuration of a wire rope 10C according to a fifth embodiment. Below, among the configurations of the wire rope 10C, those identical to those of the wire ropes 10, 10A, 10B according to the embodiments as described above have the same reference numbers, and their descriptions will be omitted appropriately.

As shown in Figure 7, the wire rope 10C according to the fifth embodiment includes a rope body 15C, the lubricant 40, and the resin layer 50. The wire rope 10C according to the fifth embodiment differs from the wire rope 10 according to the first embodiment mainly in that the rope body 15C is formed with the core strand 20. That is, the rope body 15C does not have the side strands 30.

The rope body 15C is formed with the core strand 20 as described above. More specifically, the core strand 20 is formed by twisting a total 19 of the element wires 21, 23 into the Warrington-twist. It is noted that the configurations of the core strand 20 of the present embodiment are each similar to those of the core strand 20 of the first embodiment, and their descriptions will be omitted.

As described above, the wire rope 10C includes the lubricant 40. The lubricant 40 is interposed in at least some of the spaces between the element wires 21, 23 of the core strand 20. Specifically, at least a portion of the element wires 21, 23 is coated with the lubricant 40. It is noted that the configurations of the lubricant 40 and the resin layer 50 of the present embodiment are each similar to those of the lubricant 40 and the resin layer 50 of the first embodiment, and their descriptions will be omitted.

Again in the wire rope 10C, the provision of the resin layer 50 as in the wire rope 10 according to the first embodiment can allow the lubricant 40 interposed between the plurality of element wires 21, 23 of the core strand 20 to remain between the element wires 21, 23 without causing leakage of the lubricant 40 from the wire rope 10C. Therefore, according to the wire rope 10C, the effects of the lubricant 40 can be maintained for a long period of time, and the durability of the wire rope 10C can also be improved.

### G. Sixth embodiment:

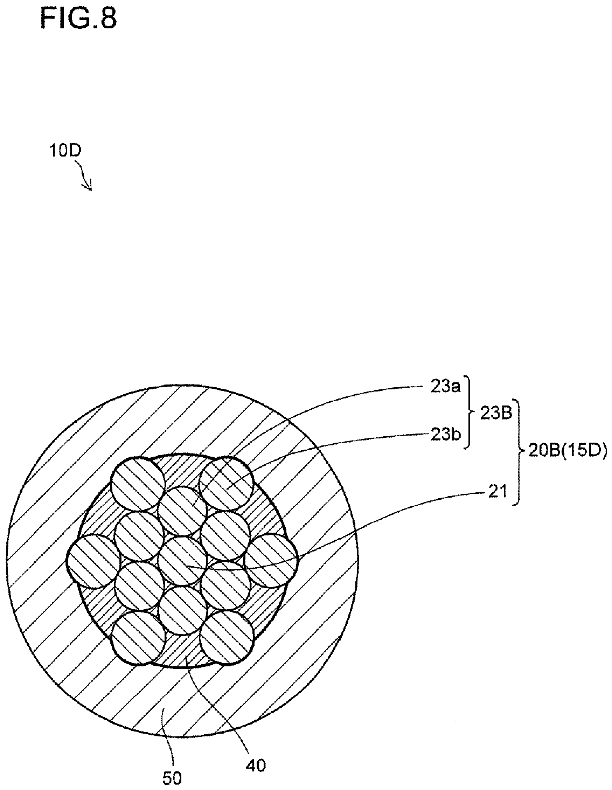

Figure 8 shows a diagram of the cross-sectional configuration of a wire rope 10D according to a sixth embodiment. Below, among the configurations of the wire rope 10D, those identical to those of the wire ropes 10, 10A, 10B, 10C according to the embodiments as described above have the same reference numbers, and their descriptions will be omitted appropriately.

As shown in Figure 8, the wire rope 10D includes a rope body 15D, the lubricant 40, and the resin layer 50. The wire rope 10D differs from the wire rope 10B according to the fourth embodiment mainly in that the rope body 15D is formed with a core strand 20B. That is, the rope body 15D does not have the side strands 30.

The rope body 15D is formed with the core strand 20B as described above. More specifically, the core strand 20B is formed by twisting a total 13 of the element wires 21, 23B into the parallel twist. It is noted that the configurations of the core strand 20B of the present embodiment are each similar to those of the core strand 20B of the fourth embodiment, and their descriptions will be omitted.

As described above, the wire rope 10D includes the lubricant 40. In the wire rope 10D, the lubricant 40 is interposed in at least some of the spaces between the element wires 21, 23B of the core strand 20B. Specifically, at least a portion of the element wires 21, 23B is coated with the lubricant 40. It is noted that the configurations of the lubricant 40 and the resin layer 50 of the present embodiment are each similar to those of the lubricant 40 and the resin layer 50 of the fourth embodiment, and their descriptions will be omitted.

In the wire rope 10D, the provision of the resin layer 50 as in the wire rope 10B according to the fourth embodiment can allow the lubricant 40 interposed between the plurality of element wires 21, 23B of the core strand 20B to remain between the element wires 21, 23B without causing leakage of the lubricant 40 from the wire rope 10D. Therefore, according to the wire rope 10D, the effects of the lubricant 40 can be maintained for a long period of time, and the durability of the wire rope 10D can also be improved.

### H. Variations:

The technology as disclosed herein shall not be limited to the aforementioned embodiments, and modifications may be made to provide variations without departing from the spirit thereof. For example, the following variations may be possible.

The configuration of the wire rope 10 according to the first embodiment is provided merely as an example, and may be modified in a variety of ways. For example, the number of the side strands 30, the number of element wires of the side strands 30 and the core strand 20, and the number of layers in the wire rope 10 according to the aforementioned embodiments may be modified in a variety of ways. In the wire rope 10 of the aforementioned embodiments, either the core strand 20 or the side strands 30 may be composed of a single element wire. In the wire rope 10 according to the aforementioned embodiments, the type of twist of the core strand 20 is not limited to the Warrington-twist, but may be other parallel twists such as the seale twist, the filler twist, Warrington-seale twist; or other type of twist such as the cross twist. In the wire rope 10 according to the aforementioned embodiments, the type of twist of the side strands 30 is not limited to the parallel twist, but may be other types of twist such as the cross twist. Moreover, the materials of members in the wire rope 10 according to the aforementioned embodiments are each provided merely as an example, and may be modified in a variety of ways.

In the wire rope 10 according to the aforementioned embodiments, the lubricant 40 may be a solid or semi-solid at ordinary temperature, and the viscosity of the lubricant 40 may be less than 100 mm²/s or more than 14100 mm²/s.

### Reference Signs List

10, 10A, 10B, 10C, 10D: Wire rope
15, 15A, 15B, 15C, 15D: Rope body
20, 20B: Core strand
21: Core element wire
23, 23B: Side element wire
23a, 23b, 23c: Side element wire
30: Side strand
31: Core element wire
33: Side element wire
40: Lubricant
50: Resin layer
101: Air cylinder
103a, 103b: Pulley
105: Stopper
107: Weight

## Claims

1. A wire rope, comprising:
a rope body having an at least one strand each formed with a plurality of element wires twisted each other,
a lubricant interposed between the plurality of element wires of the at least one strand, and
a resin layer coating the outer periphery of the rope body along with the lubricant,
the lubricant containing a sulfur-containing organic molybdenum compound.

2. The wire rope according to claim 1, wherein
the lubricant is a liquid at ordinary temperature.

3. The wire rope according to claim 1 or 2, wherein
the lubricant has a viscosity of 100 mm²/s or more and 14100 mm²/s or less at ordinary temperature

4. The wire rope according any one of claims 1 to 3, wherein
the rope body has a core strand as the at least one strand.

5. The wire rope according to claim 4, wherein
the core strand is Warrington-twisted.

6. The wire rope according to claim 4 or 5, wherein
the rope body further has, as the at least one strand, a plurality of side strands twisted around the core strand.

7. The wire rope according any one of claims 1 to 6, wherein
the sulfur-containing organic molybdenum compound is at least one of molybdenum dialkyldithiocarbamate and molybdenum dialkylphosphorodithioate.

8. A wire rope, comprising:
a rope body having an at least one strand each formed with a plurality of element wires twisted each other,
a lubricant interposed between the plurality of element wires of the at least one strand, and
a resin layer coating the outer periphery of the rope body along with the lubricant,
the lubricant containing a sulfur-free organic molybdenum compound and a sulfur-containing organic compound.

9. The wire rope according to claim 8, wherein
the lubricant is a liquid at ordinary temperature.

10. The wire rope according to claim 8 or 9, wherein
the lubricant has a viscosity of 100 mm²/s or more and 14100 mm²/s or less at ordinary temperature.

11. The wire rope according any one of claims 8 to 10, wherein
the rope body has a core strand as the at least one strand.

12. The wire rope according to claim 11, wherein
the core strand is Warrington-twisted.

13. The wire rope according to claim 11 or 12, wherein
the rope body further has, as the at least one strand, a plurality of side strands twisted around the core strand.
